# EUROPEAN PATENT APPLICATION

(11) **EP 3 162 679 A1**
(43) Date of publication of application: **03.05.2017**
(21) Application number: 14895654.3
(22) Date of filing: 21.10.2014
(51) Int. Cl.: B62K 3/00, G01D 21/00

(54) **DRIVING MODE DETECTION DEVICE AND DETECTION METHOD FOR DYNAMIC BALANCE CAR**

(30) Priority: 24.06.2014 CN 201420340718 U
(71) Applicant: Ninebot (Tianjin) Tech Co., Ltd., Tianjian 301700 (CN)
(72) Inventor: CHEN, Zhongyuan, Tianjian 301700 (CN); ZHANG, Zhenyuan, Tianjian 301700 (CN); WANG, Ye, Tianjian 301700 (CN)
(74) Representative: Regimbeau
(86) International application number: PCT/CN2014/000934
(87) International publication number: WO 2015/196319

(57) **Abstract**

The disclosure discloses a device for detecting a driving mode of a self-balancing vehicle including: a detecting system comprising at least one detecting mechanism (102) each of which (102) is installed at each detecting point under a pedal (101) of the electric self-balancing vehicle and is used for detecting whether the pedal (101) deforms at a corresponding detecting point and sending the detection result to the controller; and the controller for judging whether the pedal (101) deforms according to the detection result sent by each detecting mechanism (102) and then determining current driving mode of the electric self-balancing vehicle. The driving mode includes a manned mode and an unmanned mode. The disclosure also discloses a method for detecting a driving mode of a self-balancing vehicle. The disclosure can prevent the electric self-balancing vehicle from entering an action state caused by a misoperation of the driver and eliminate potential dangers.

## Description

This application claims priority from the Chinese Patent Application No. 201420340718.0, entitled "*Driving mode detection device for dynamic balance vehicle*", filed before the State Intellectual Property Office of the People's Republic of China (SIPO) on June 24, 2014, the entire contents of which are hereby incorporated by reference.

### TECHNICAL FIELD

The disclosure relates to the technical field of vehicle, and in particular to a device and method for detecting a driving mode of a self-balancing vehicle.

### BACKGROUND

A self-balancing vehicle, also called an electric self-balancing vehicle, a sensor controlled vehicle, intelligent vehicle and etc., is an advanced short-distance vehicle. For example, the self-balancing vehicle robots of the ninebot series available on the market directly utilize electrical energy as power, sense the position and state of the vehicle body by means of a position and state sensing sensor which is composed of a build-in Micro Electro Mechanical System (MEMS) gyroscope and an accelerometer, and calculate control instructions by means of a high-speed processor for driving a motor to move the vehicle body.

In the traditional art, the driver needs to make the self-balancing vehicle distinguish a manned mode and an unmanned mode by controlling an accelerator or a manual deformation switch. However, when the driver leaves the self-balancing vehicle, if the driver forgets to shut off the accelerator or the manual deformation switch, or if the driver touches the accelerator or the manual deformation switch by mistake, the self-balancing vehicle still judges that the vehicle is in the manned mode, so the self-balancing vehicle may enter an action state, which causes certain potential dangers.

So, it is urgent to provide a device for detecting a driving mode of a self-balancing vehicle, which can prevent the self-balancing vehicle from entering an action state caused by a misoperation of the driver, and eliminate potential dangers.

### SUMMARY

The object of the disclosure is to provide a device and method for detecting a driving mode of a self-balancing vehicle, which can effectively prevent the self-balancing vehicle from entering an action state caused by a misoperation of the driver, and eliminate potential dangers.

To this end, the technical solutions of the disclosure are implemented as follows.

The first object of the disclosure is to provide a device for detecting a driving mode of a self-balancing vehicle, which includes: a detecting system including at least one detecting mechanism each of which is installed at each of detecting points under a pedal of the self-balancing vehicle, and is used for detecting whether a deformation occurs in the pedal at a corresponding one of the detecting points and sending the detection result to the controller;
the controller which is used for judging whether the deformation occurs in the pedal according to the detection result sent by each detecting mechanism, and then determining current driving mode of the self-balancing vehicle; wherein the driving mode includes a manned mode and an unmanned mode.

Preferably, positions of the detecting points include: a position under the pedal corresponding to a toe and/or a position under the pedal corresponding to a heel.

Preferably, the detecting mechanism includes a deformation switch (112) and a detecting sensor (122).

The deformation switch (112) is arranged under the pedal, and is used for acting depending on the deformation of the pedal; the detecting sensor (122) is used for converting the deformation of the pedal into a corresponding electrical signal, and outputting the electrical signal to the controller.

Preferably, the device also includes a supporting part (103); the deformation switch (112) is arranged under the pedal by means of the supporting part (103).

Preferably, the deformation switch (112) includes a pressed part (104) and a tentacle (105); the pressed part (104) is arranged under the pedal; the tentacle (105) is fixed at a bottom surface of the pressed part (104), and is used for transferring the deformation of the pedal; and when the deformation does not occur in the pedal, there is a gap between the pressed part (104) and the pedal.

Preferably, the deformation switch includes the tentacle (105) which is fixed at a bottom surface of the pedal.

Preferably, the detecting sensor (122) is a photoelectric sensor and arranged under the deformation switch (112); the photoelectric sensor includes a transmitter (132) and a receiver (142) which are facing with each other; when the deformation does not occur in the pedal, the tentacle (105) does not block an optical transmission channel between the transmitter (132) and the receiver (142); when the deformation occurs in the pedal, the tentacle (105) moves downwards to block the optical transmission channel between the transmitter (132) and the receiver (142); and the controller determines the driving mode of the pedal according to whether the signal sent by the receiver (142) can be received.

Preferably, the detecting sensor (122) includes a resettable trigger switch (123) and a signal generator (124); and the resettable trigger switch (123) is used for controlling whether the signal generator (124) sends a signal to the controller.

The resettable trigger switch (123) is arranged directly under the deformation switch (112); when the deformation does not occur in the pedal, the tentacle (105) of the deformation switch (112) is directly above the resettable trigger switch, the resettable trigger switch is in an off state to control the signal generator not send a signal to the controller; when the deformation occurs in the pedal, the tentacle (105) moves downwards to press the resettable trigger switch, so as to make the resettable trigger switch enter an on state to control the signal generator (124) to send a signal to the controller; and the controller determines the driving mode of the pedal according to whether the signal sent by the signal generator (124) can be received.

Preferably, the detecting mechanism includes a pressure sensor.

The pressure sensor is fixedly installed under the pedal and contacts the bottom surface of the pedal; and the pressure sensor is used for detecting a value of current pressure of the pedal and sending the detected value of the current pressure to the controller.

The controller determines the driving mode of the pedal according to the value of the current pressure or a corresponding relation between the value of the current pressure and a preset pressure value.

The second intention of the disclosure is to provide a method for detecting a driving mode of a self-balancing vehicle; n detecting points are arranged under the pedal of the self-balancing vehicle; the detecting mechanism is installed at each of the detecting points, and there are n detecting mechanisms installed, where n is a natural number; and the method includes the following steps:
step 1 that each of the detecting mechanisms detects whether a deformation occurs in the pedal at a corresponding one of the detecting points and sends the detection result to the controller; and
step 2 that the controller determines whether the deformation occurs in the pedal according to the detection result sent by each of the detecting mechanisms, and then determines current driving mode of the self-balancing vehicle; wherein the driving mode includes the manned mode and the unmanned mode.

The disclosure has the following beneficial effects.

By means of the device and method for detecting a driving mode of a self-balancing vehicle provided by the disclosure, compared with the existing solutions, once the pedal of the self-balancing vehicle deforms, the detecting mechanism under the pedal can automatically detect whether the deformation occurs in the entire pedal to judge whether the self-balancing vehicle is in a manned mode, thus preventing the self-balancing vehicle from entering an action state caused by a misoperation of the driver, and eliminating potential dangers.

### BRIEF DESCRIPTION OF THE DRAWINGS

Fig. 1 is a top view of a device for detecting a driving mode of a self-balancing vehicle provided by this application;
Fig. 2 is a bottom view corresponding to Fig. 1;
Fig. 3 is a side section view of the device for detecting a driving mode of a self-balancing vehicle, according to an embodiment 1 of this application;
Fig. 4 is a partial enlarged detail of part A in Fig. 3;
Fig. 5 is a schematic diagram showing a state of a combination of a deformation switch and a photoelectric sensor after a pedal deforms, according to the embodiment 1 of the application;
Fig. 6 is a bottom view of the device for detecting a driving mode of a self-balancing vehicle installed thereon the photoelectric sensor, according to the embodiment 1 of the application;
Fig. 7 is a side section view corresponding to Fig. 6;
Fig. 8 is a side section view of the device for detecting a driving mode of a self-balancing vehicle, according to an embodiment 2 of this application;
Fig. 9 is a partial enlarged detail of part B in Fig. 8; and
Fig. 10 is a schematic diagram of a position under the device for detecting a driving mode of a self-balancing vehicle, according to the embodiment 2 of the application.

### DETAILED DESCRIPTION

The technical solutions of the disclosure are described in detail below in combination with the accompanying drawings and preferred embodiments. It should be understood that the embodiments described below are only used for illustrating the disclosure and not intended to limit the technical solutions of the disclosure.

The concept of the disclosure is described below.

The concept of the device for detecting a driving mode of a self-balancing vehicle provided by embodiments of the disclosure is that:
The device for detecting a driving mode of a self-balancing vehicle includes a detecting system and a controller. The detecting system includes at least one detecting mechanism each of which is installed at each of detecting points under a pedal of the self-balancing vehicle, and is used for detecting whether a deformation occurs in the pedal at a corresponding one of the detecting points and sending the detection result to the controller; the controller which is used for judging whether the deformation occurs in the pedal according to the detection result sent by each detecting mechanism, and then determining current driving mode of the self-balancing vehicle; wherein the driving mode includes a manned mode and an unmanned mode.

A specific example that four detecting mechanisms are installed is given below.

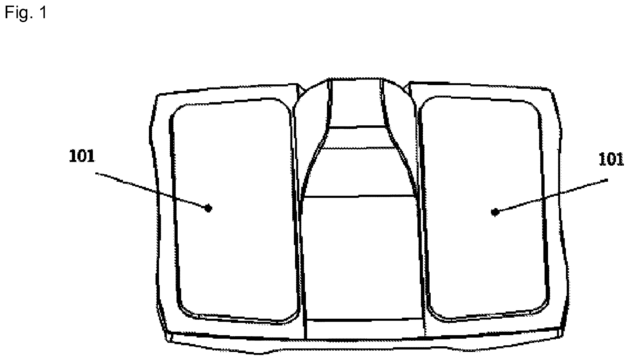

Fig. 1 is a top view of a device for detecting a driving mode of a self-balancing vehicle provided by this application. The device includes a pedal 101. A user places both feet on the pedal to stand on the self-balancing vehicle.

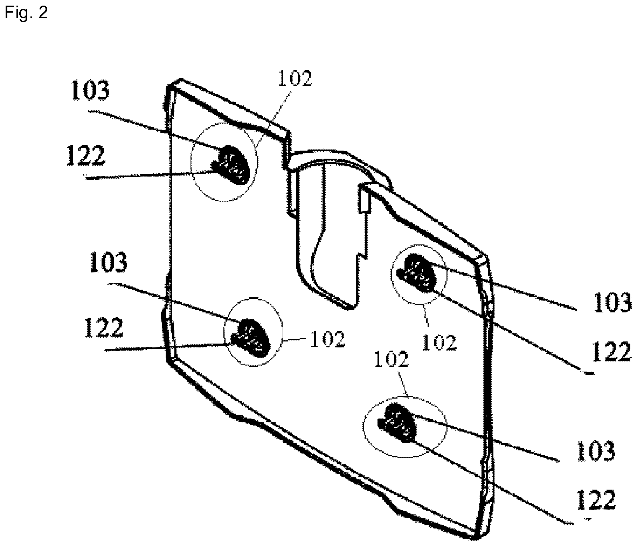

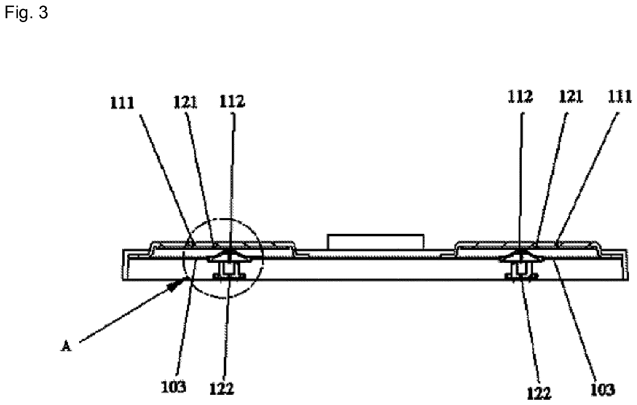

Fig. 2 is a bottom view corresponding to Fig. 1. It can be seen from Fig. 2 that the detecting points are respectively arranged at the positions where the user stands on both feet on the pedal 101, namely the position corresponding to the left toe, the position corresponding to the left heel, the position corresponding to the right toe, and the position corresponding to the right heel on the pedal 101. And a detecting mechanism is arranged at each detecting point. That is, there are four arranged detecting mechanisms. Actually, each detecting mechanism is under the pedal 101 to detect whether the deformation occurs in the pedal. The lable 102 in Fig. 2 represents the detecting mechanisms. Each of the detecting mechanisms includes a deformation switch 112 and a detecting sensor 122. Please refer to Fig. 3 for more details.

It should be noted that the number and position of the detecting mechanisms are not limited to the above particular arrangement. The detecting mechanisms can be selectively arranged at a toe position or a heel position. And the number of the detecting mechanisms can be greater than 4. Moreover, the detecting mechanisms can be arranged according to the shape of a circle or the shape of two feet, the details of which will not be described here.

When four detecting mechanisms are arranged according to Fig. 2, each of the detecting mechanisms sends a signal for the deformation of the detected position to the controller as the detection result. Then, the controller comprehensively analyses the received signals for the deformations from the respective detecting mechanisms according to a certain analysis strategy, so as to eventually determine the driving mode of the self-balancing vehicle. For example, if any one of the four detecting mechanisms detects that the pedal deforms, it is determined that the self-balancing vehicle is in the manned mode. If none of the four detecting mechanisms detects that the pedal deforms, it is determined that the self-balancing vehicle is in the unmanned mode. Certainly, other analysis strategies can be adopted. For example, if at least two of the four detecting mechanisms detect that the pedal deforms, it is determined that the self-balancing vehicle is in the manned mode, and otherwise, it is determined that the self-balancing vehicle is in the unmanned mode.

To sum up, in the disclosure, once the pedal deforms at the stepping position of the self-balancing vehicle, the detecting mechanism under the pedal can automatically detect whether the deformation occurs in the entire pedal to judge whether the self-balancing vehicle is in the manned mode. As such, the self-balancing vehicle can be prevented from entering an action state caused by a misoperation of the driver, and potential dangers can be eliminated.

In the disclosure, any detecting mechanisms with function of detecting whether a deformation occurs in the pedal at a corresponding one of the detecting points fall within the scope of protection of the disclosure. For better understanding, the principles of the implementations of three types of specific detecting mechanisms are described below by means of embodiments 1 to 3. However, those skilled in the art should understand that the specific structures of the detecting mechanism of the disclosure are not limited to those in the following embodiments, there can also be other equivalent alternatives, which are not limited by the disclosure.

### Embodiment 1

Fig. 3 is a side section view of the device for detecting a driving mode of a self-balancing vehicle, according to an embodiment 1 of this application. The detecting mechanism includes the deformation switch 112 and the detecting sensor 122. The deformation switch 112 is arranged under the pedal, and is used for acting depending on the deformation of the pedal. The detecting sensor 122 is used for converting the deformation of the pedal into a corresponding electrical signal, and outputting the electrical signal to the controller.

The pedal 101 shown in Fig. 3 includes a pedal pad 111 and a supporting plate 121 which are separate from each other. The pedal pad 111 is above the supporting plate 121. The deformation switch 112 is arranged under the supporting plate 121. However, it should be noted that the specific structure of the pedal is not limited to this separate structure, there can also be other equivalent alternatives, for example, an integral pedal, a hollow structure, a hollow structure with convex points, which are not limited by the disclosure.

### (1) Deformation switch

The deformation switch 112 is arranged under the pedal, and is used for acting depending on the deformation of the pedal. The detecting sensor 122 is used for converting the deformation of the pedal into the corresponding electrical signal and outputting the electrical signal to the controller.

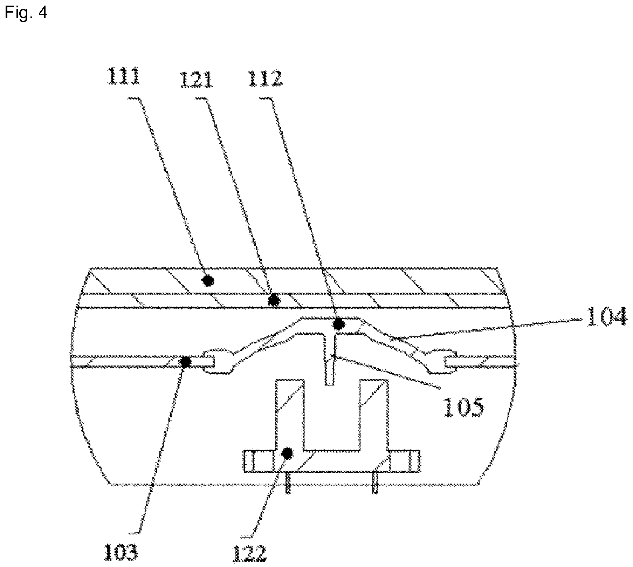

Fig. 4 is a partial enlarged detail of part A in Fig. 3, and also is a schematic diagram showing the state of the combination of the deformation switch and the photoelectric sensor when the deformation does not occur in the pedal. The deformation switch 112 includes the pressed part 104 and a tentacle 105. The pressed part 104 is arranged under the pedal. The tentacle 105 is fixed at a bottom surface of the pressed part 104, and is used for transferring the deformation of the pedal. There is a gap between the pressed part 104 and the pedal when the deformation does not occur in the pedal, or the pressed part 104 is directly arranged under the pedal.

Certainly, in practical applications, the pressed part 104 may be omitted in the deformation switch, and the deformation switch may include the tentacle 105 only. In such case, the tentacle 105 is fixed at a bottom surface of the pedal to transfer the deformation of the pedal. The disclosure does not limit the specific structure of the deformation switch, and various modifications may be made to the deformation switch as demands, and the details are not described with reference to accompanying drawings.

For facilitating the fixing of the deformation switch, a supporting part 103 is included. The supporting part 103 and the deformation switch 112 are cast integrally. The supporting part 103 is under the supporting plate 121 and above the detecting sensor 122. The supporting part 103 may be a covering plate.

Moreover, in the disclosure, in the process from deformation to restoration of the pedal, the deformation switch can also restore, so the deformation switch 112 is made of silica gel, rubber or PU, and other elastic materials to ensure its restoration.

### (2) Detecting sensor

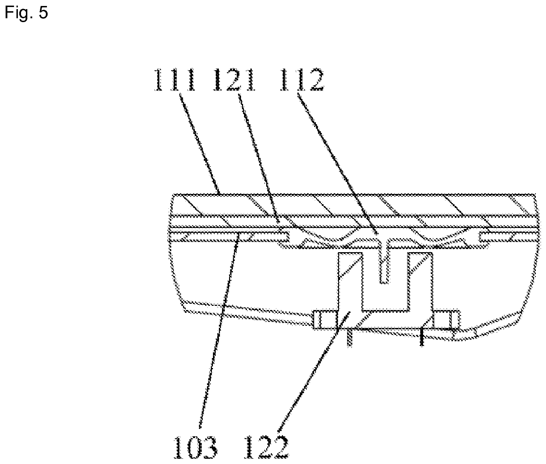

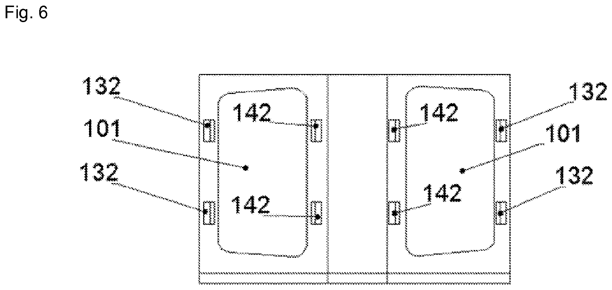

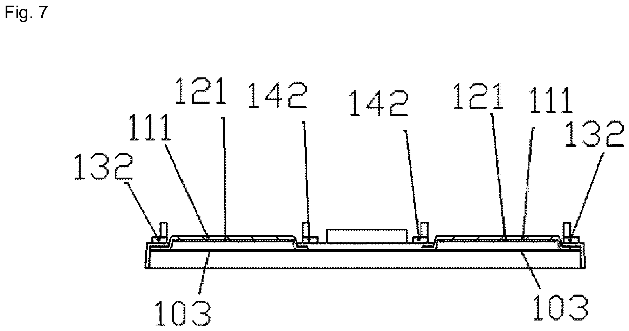

The detecting sensor 122 is a photoelectric sensor and arranged under the deformation switch 112. Fig. 6 is a bottom view of the device for detecting a driving mode of a self-balancing vehicle installed thereon the photoelectric sensor according to the present embodiment. Fig. 7 is a side section view corresponding to Fig. 6. In both Fig. 6 and Fig. 7, four photoelectric sensors 122 as the detecting sensors are installed. Each photoelectric sensor 122 includes a transmitter 132 and a receiver 142. The transmitter 132 and the receiver 142 are arranged at two sides of each pedal and face with each other. In practical applications, the transmitter can be an infrared transmitter, and the receiver can be an infrared receiver. When the deformation does not occur in the pedal, the tentacle 105 is above an optical transmission channel between the transmitter 132 and the receiver 142, as shown in Fig. 4. Thus, the tentacle 105 does not block the optical transmission channel between the transmitter 132 and the receiver 142. When the deformation occurs in the pedal, the tentacle 105 moves downwards to block the optical transmission channel between the transmitter 132 and the receiver 142, as shown in Fig. 5 which is a schematic diagram showing the state of the combination of the deformation switch and the photoelectric sensor after the pedal deforms. The controller determines the driving mode of the pedal according to whether the signal sent by the receiver 142 can be received.

For example, the transmitter may be configured to send an optical signal with a time interval of three seconds. When the driver does not stand on the pedal and thus the pedal does not deforms, all the optical signals sent by the transmitter with a time interval of three seconds can be received by the receiver, and the receiver sends a signal to the controller with a time interval of three seconds. As such, it can be determined that the current driving mode is the unmanned mode, as long as the controller can receive the signal from the receiver with a time interval of three seconds. At one moment, when the driver stands on the pedal and thus the pedal deforms due to the pressure, the tentacle moves downwards and reaches the inside of the photoelectric sensor to block the optical transmission channel between the transmitter 132 and the receiver 142. At this point, although the transmitter still sends an optical signal with a time interval of three seconds, the receiver cannot receive the optical signal sent by the transmitter. As such, the receiver cannot send the signal to the controller. That is, there is no signal output from the photoelectric sensor. Thus, it can be determined that the current driving mode is the manned mode, as long as the controller does not receive the signal from the receiver for three seconds. At next moment, the driver leaves the pedal, and the pedal restores to an original state where it does not deform, then the tentacle ejects from the photoelectric sensor because it is not pressed by the pedal and restores to an un-pressed state, which unblocks the optical transmission channel between the transmitter 132 and the receiver 142. Thus, it can be determined that the current driving mode is the unmanned mode, as long as there is signal output from the photoelectric sensor, and the controller can receive the signal from the receiver with a time interval of three seconds.

### Embodiment 2

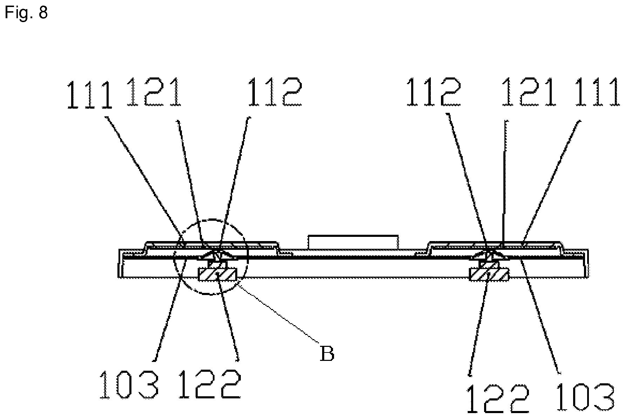

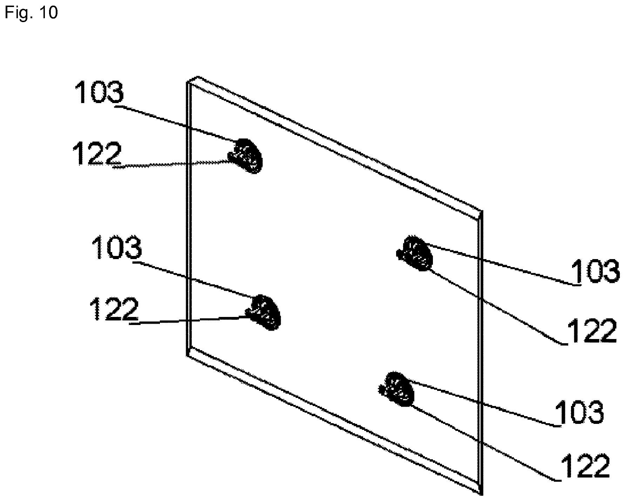

Fig. 8 is a side section view of the device for detecting a driving mode of a self-balancing vehicle provided by the embodiment. Fig. 10 is a schematic diagram of bottom of the device for detecting a driving mode of a self-balancing vehicle provided by the embodiment. In the embodiment, the detecting mechanism also includes the deformation switch 112 and the detecting sensor 122. The deformation switch has the same structure as that of the deformation switch provided by the embodiment 1, so it will not be repeated here.

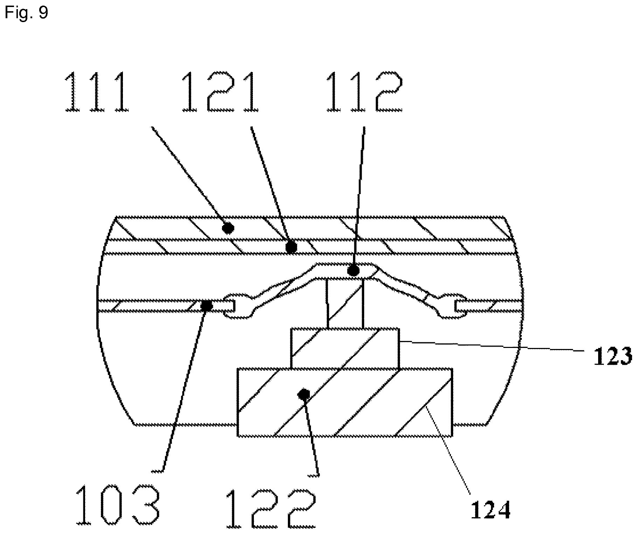

Fig. 9 is a partial enlarged detail of part B in Fig. 8. The detecting sensor 122 includes a resettable trigger switch 123 and a signal generator 124. The resettable trigger switch is used for controlling whether the signal generator sends a signal to the controller.

The resettable trigger switch is arranged directly under the deformation switch 112. When the deformation does not occur in the pedal, the tentacle 105 of the deformation switch 112 is directly above the resettable trigger switch, and the resettable trigger switch is in an off state to control the signal generator not send a signal to the controller. When the deformation occurs in the pedal, the tentacle 105 moves downwards to press the resettable trigger switch, so as to make the resettable trigger switch enter an on state to control the signal generator to send a signal to the controller. The controller determines the driving mode of the pedal according to whether the signal sent by the signal generator can be received.

For example, when the driver does not stand on the pedal, the pedal does not deform, and the tentacle 105 of the deformation switch 112 is directly above the resettable trigger switch, then the resettable trigger switch is in the off state, and controls the signal generator not send a signal to the controller. Thus, it can be determined that the current driving mode is the unmanned mode because the controller does not receive the signal sent by the signal generator. At one moment, when the driver stands on the pedal, the pedal deforms due to the pressure, and the tentacle 105 of the deformation switch moves downwards to press the resettable trigger switch, then the resettable trigger switch is in the on state, at this point, the signal generator sends a signal to the controller. Thus, it can be determined that the current driving mode is the manned mode because the controller receives the signal sent by the signal generator. At next moment, the driver leaves the pedal, the pedal restores to the original state where it does not deform, and the trigger restores upwards, then the resettable trigger switch restores upwards to the un-pressed state (i.e., switches to an off state) because the resettable trigger switch is not pressed by the tentacle of the deformation switch, and controls the signal generator not send a signal to the controller. Thus, it can be determined that the current driving mode is the unmanned mode because the controller does not receive the signal sent by the signal generator.

### Embodiment 3

In the embodiment, the detecting mechanism includes a pressure sensor only, and the deformation switch is omitted.

The pressure sensor is fixedly installed under the pedal and contacts the bottom surface of the pedal. The pressure sensor is used for detecting a value of current pressure of the pedal and sending the detected value of the current pressure to the controller.

The controller determines the driving mode of the pedal according to the value of the current pressure or a corresponding relation between the value of the current pressure and a preset pressure value. For example, if the value of the current pressure is smaller than a preset minimum value, it is determined that the current driving mode is the unmanned mode. If the value of the current pressure is greater than a preset maximum value, it is determined that the current driving mode is the manned mode.

In addition, the disclosure also provides a method for detecting a driving mode of a self-balancing vehicle. N detecting points are arranged under the pedal of the self-balancing vehicle. A detecting mechanism is installed at each of the detecting points, and there are n detecting mechanisms installed, where n is a natural number. The method includes the following steps.

In step 1, each of the detecting mechanisms detects whether a deformation occurs in the pedal at a corresponding one of the detecting points, and sends the detection result to the controller.

In step 2, the controller determines whether the deformation occurs in the pedal according to the detection results sent by the detecting mechanisms, and then determines the current driving mode of the self-balancing vehicle. The driving mode includes the manned mode and the unmanned mode.

To sum up, the device and method for detecting a driving mode of a self-balancing vehicle provided by the disclosure can precisely prevent the self-balancing vehicle from entering an action state caused by a misoperation of the driver, and eliminate potential dangers.

The above illustrates and describes a number of preferred embodiments, but as described above, it should be understood that the disclosure is not limited to these forms disclosed by the application. These forms should not be regarded as exclusions from other embodiments, but can be applied to various other combinations, modifications, and environments. Besides, these forms can be modified by means of the above instructions, or technologies or knowledge in related fields without departing from the conception scope of the disclosure. On the premise of not departing from the spirit and scope of the disclosure, any modification and variation made by those skilled in the art should fall within the scope of claims of the disclosure.

## Claims

1. A device for detecting a driving mode of a self-balancing vehicle, comprising:
a detecting system comprising at least one detecting mechanism each of which is installed at each of detecting points under a pedal of the self-balancing vehicle, and is used for detecting whether a deformation occurs in the pedal at a corresponding one of the detecting points and sending the detection result to the controller;
the controller which is used for judging whether the deformation occurs in the pedal according to the detection result sent by each detecting mechanism, and then determining current driving mode of the self-balancing vehicle; wherein the driving mode comprises a manned mode and an unmanned mode.

2. The device according to claim 1, wherein positions of the detecting points comprise: a position under the pedal corresponding to a toe and/or a position under the pedal corresponding to a heel.

3. The device according to claim 1, wherein the detecting mechanism comprises a deformation switch (112) and a detecting sensor (122);
the deformation switch (112) is arranged under the pedal, and is used for acting depending on the deformation of the pedal; and the detecting sensor (122) is used for converting the deformation of the pedal into a corresponding electrical signal, and outputting the electrical signal to the controller.

4. The device according to claim 3, further comprising: a supporting part (103); wherein the deformation switch (112) is arranged under the pedal by means of the supporting part (103).

5. The device according to claim 3, wherein the deformation switch (112) comprises a pressed part (104) and a tentacle (105); the pressed part (104) is arranged under the pedal; the tentacle (105) is fixed at a bottom surface of the pressed part (104), and is used for transferring the deformation of the pedal; when the deformation does not occur in the pedal, there is a gap between the pressed part (104) and the pedal.

6. The device according to claim 3, wherein the deformation switch comprises a tentacle (105) which is fixed at a bottom surface of the pedal.

7. The device according to any one of claims 3 to 6, wherein the detecting sensor (122) is a photoelectric sensor and arranged under the deformation switch (112); the photoelectric sensor comprises a transmitter (132) and a receiver (142) which are facing with each other; when the deformation does not occur in the pedal, the tentacle (105) does not block an optical transmission channel between the transmitter (132) and the receiver (142); when the deformation occurs in the pedal, the tentacle (105) moves downwards to block the optical transmission channel between the transmitter (132) and the receiver (142); and the controller determines the driving mode of the pedal according to whether the signal sent by the receiver (142) can be received.

8. The device according to any one of claims 3 to 6, wherein the detecting sensor (122) comprises a resettable trigger switch (123) and a signal generator (124); and the resettable trigger switch (123) is used for controlling whether the signal generator (124) sends a signal to the controller;
the resettable trigger switch (123) is arranged directly under the deformation switch (112); when the deformation does not occur in the pedal, the tentacle (105) of the deformation switch (112) is directly above the resettable trigger switch, the resettable trigger switch is in an off state to control the signal generator not send a signal to the controller; when the deformation occurs in the pedal, the tentacle (105) moves downwards to press the resettable trigger switch, so as to make the resettable trigger switch enter an on state to control the signal generator (124) to send a signal to the controller; and the controller determines the driving mode of the pedal according to whether the signal sent by the signal generator (124) can be received.

9. The device according to claim 1, wherein the detecting mechanism comprises a pressure sensor;
the pressure sensor is fixedly installed under the pedal and contacts the bottom surface of the pedal; and the pressure sensor is used for detecting a value of current pressure of the pedal and sending the detected value of the current pressure to the controller;
the controller determines the driving mode of the pedal according to the value of the current pressure or a corresponding relation between the value of the current pressure and a preset pressure value.

10. A method for detecting a driving mode of a self-balancing vehicle, wherein n detecting points are arranged under a pedal of the self-balancing vehicle; a detecting mechanism is installed at each of the detecting points, and there are n detecting mechanisms installed, where n is a natural number; the method comprising:
a step 1 of detecting, by each of the detecting mechanisms, whether a deformation occurs in the pedal at a corresponding one of the detecting points, and sending the detection result to a controller; and
a step 2 of judging, by the controller, whether the deformation occurs in the pedal according to the detection results sent by the detecting mechanisms, and then determining current driving mode of the self-balancing vehicle; wherein the driving mode comprises a manned mode and an unmanned mode.
